(19) **Europäisches Patentamt / European Patent Office / Office européen des brevets**

(11) **EP 4 654 537 A1**

(12) **EUROPEAN PATENT APPLICATION**
published in accordance with Art. 153(4) EPC

(43) Date of publication:
26.11.2025 Bulletin 2025/48

(21) Application number: 23924622.6

(22) Date of filing: 28.02.2023

(51) International Patent Classification (IPC):
*H04L 25/02* $^{(2006.01)}$

(52) Cooperative Patent Classification (CPC):
H04L 25/02

(86) International application number:
PCT/CN2023/078878

(87) International publication number:
WO 2024/178650 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Huawei Technologies Co., Ltd.
Shenzhen, Guangdong 518129 (CN)

(72) Inventors:
• QU, Huiyang
  Shenzhen, Guangdong 518129 (CN)
• MA, Qianli
  Shenzhen, Guangdong 518129 (CN)
• HUANG, Huang
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **INFORMATION TRANSMISSION METHOD, APPARATUS AND SYSTEM**

(57)    This application discloses an information transmission method, an apparatus, and a system. After performing channel estimation based on a CSI-RS to obtain a channel frequency domain response matrix H with a size of M×N, a terminal device compresses the channel frequency domain response matrix $H$ by using a second codebook $B$, to obtain a channel gain coefficient $c$, and sends the channel gain coefficient c to a network device. A column vector of the second codebook $B$ is obtained by extracting a column vector of a first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\tilde{f}_d$ of the terminal device. Therefore, the terminal device compresses the channel frequency domain response matrix $H$ by using the second codebook $B$, so that a compression rate of the channel frequency domain response matrix $H$ can be ensured, and a Doppler characteristic of a channel can be better retained. This helps reduce a channel reconstruction error of the network device and improve communication performance.

FIG. 7

**Description**

TECHNICAL FIELD

This application relates to the field of communication technologies, and in particular, to an information transmission method, an apparatus, and a system.

BACKGROUND

Currently, after a terminal device performs channel estimation to obtain a channel frequency domain response matrix, to reduce an information feedback amount, the terminal device usually compresses the channel frequency domain response matrix by using a double discrete Fourier transform (Discrete Fourier Transform, DFT) codebook, and then reports the compressed channel frequency domain response matrix to a network device. However, a multi-path delay and a Doppler effect of a channel exist in wireless communication. Resolution of the DFT codebook is low, and characterization precision of channel Doppler information is poor. Consequently, the terminal device can feed back only a small amount of integer-multiple channel Doppler information. As a result, a channel reconstruction error of the network device is large, and communication performance is affected.

SUMMARY

This application provides an information transmission method, an apparatus, and a system, so that a terminal device feeds back accurate channel state information to a network device, to reduce a channel reconstruction error of the network device and improve communication performance.

According to a first aspect, an information transmission method is provided, including: A terminal device receives a CSI-RS on a channel state information sounding signal CSI-RS resource block; the terminal device performs channel estimation based on the CSI-RS, to obtain a channel frequency domain response matrix $H$ with a size of $M \times N$; the terminal device compresses the channel frequency domain response matrix $H$ by using a second codebook $B$, to obtain a channel gain coefficient $c$, where N is less than or equal to a quantity of symbols included in the CSI-RS resource block, M is less than or equal to a quantity of subcarriers in a single CSI-RS symbol in the CSI-RS resource block, a column vector of the second codebook $B$ is obtained by extracting a column vector of a first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$ of the terminal device; and terminal device sends the channel gain coefficient c to a network device, where the channel gain coefficient c is used for channel reconstruction.

The first matrix $\Gamma$ is related to at least one of the CSI-RS resource block and the normalized Doppler shift $\breve{f}_d$ of the terminal device, and the column vector of the second codebook $B$ is obtained by extracting the column vector of the first codebook $\tilde{B}$. Therefore, the terminal device compresses the channel frequency domain response matrix $H$ by using the second codebook $B$, so that a compression rate of the channel frequency domain response matrix $H$ can be ensured, and a Doppler characteristic of a channel can be better retained. In this way, the terminal device can feed back accurate channel state information to the network device. This helps reduce a channel reconstruction error of the network device and improve communication performance.

In a possible design, N is configured by the network device; or N is equal to a quantity of CSI-RS symbols included in the CSI-RS resource block; or N is equal to the quantity of symbols included in the CSI-RS resource block. Certainly, the foregoing three types are merely examples but not limitations.

In a possible design, M is configured by the network device; or M is equal to the quantity of subcarriers in the single CSI-RS symbol in the CSI-RS resource block; or M is equal to a quantity of subcarriers of a CSI-RS resource block in the single CSI-RS symbol in the CSI-RS resource block. Certainly, the foregoing three types are merely examples but not limitations.

In a possible design, the normalized Doppler shift $\breve{f}_d$ indicates that a Doppler shift $f_d$ is divided by a product of M and a subcarrier width.

In a possible design, the first matrix $\Gamma$ may be constructed based on a discrete ellipsoid sequence. For example, an element in the first matrix $\Gamma$ satisfies: $\{\Gamma\}_{a,b} = sin(2\pi(a-b)\breve{f}_d/\pi(a-b)$, where $\{\Gamma\}_{a,b}$ indicates an element in an $a^{th}$ row and a $b^{th}$ column in the first matrix $\Gamma$, and the first matrix $\Gamma$ is a matrix with $M \times N$ rows and $M \times N$ columns. Correspondingly, the first codebook $\tilde{B}$ is obtained in the following manner: performing eigenvalue decomposition on the first matrix $\Gamma$, to obtain D eigenvectors, where D is a positive integer not exceeding N, the first matrix $\Gamma$ satisfies: $\Gamma \varphi_i = \lambda_i \varphi_i$, $\varphi_i$ indicates an $i^{th}$ eigenvector, $\varphi_i$ is a discrete ellipsoid sequence, and $\lambda_i$ indicates an $i^{th}$ eigenvalue; and using the D eigenvectors as column vectors of the first codebook $\tilde{B}$.

In this way, the first codebook (the first codebook may also be referred to as a discrete ellipsoid sequence codebook) can be constructed based on the discrete ellipsoid sequence, and an implementation is simple and reliable.

In a possible design, the D eigenvectors are eigenvectors corresponding to D largest eigenvalues of the first matrix $\Gamma$, and D is a positive integer not exceeding N.

The second codebook $B$ is obtained in the following manner: extracting N elements from a $j^{th}$ eigenvector $\tilde{b}_j$ in the D eigenvectors, and forming a $j^{th}$ column vector $b_j$ of the second codebook $B$ by using the extracted N elements.

A value of an eigenvalue indicates a capability concentration degree of an eigenvector (or a discrete ellipsoid sequence) on a channel. Generally, eigenvalues of the first several eigenvectors are large, and eigenvalues of subsequent eigenvectors are "cliff-like" decreased. Therefore, an eigenvector with a larger eigenvalue is extracted. In this way, a compression rate is improved, and a channel characteristic can be retained as much as possible.

In a possible design, D is a preset value, or a default value, and may be set by a person skilled in the art based on experience, or may be specified in a protocol, or may be agreed on by the network device and the terminal device. This is not limited in this application.

In a possible design, D is determined based on the normalized Doppler shift $\breve{f}_d$ .

For example, a quantity D of column vectors of the second codebook $B$ and the normalized Doppler shift $\breve{f}_d$ satisfy: $D = \left[ 2\breve{f}_d N + 1 \right] + x$ , where $x$ is an integer.

Because D is related based on the normalized Doppler shift $\breve{f}_d$ of the terminal device, the constructed second codebook $B$ may more accurately characterize a Doppler feature of a channel.

In a possible design, the terminal device may extract the N elements at equal intervals from the $j^{th}$ eigenvector $\tilde{b}_j$ in the D eigenvectors by using M consecutive elements as an extraction interval, to form the $j^{th}$ column vector $b_j$ of the second codebook $B$.

Extracting elements from the first codebook $\tilde{B}$ at equal intervals to form the second codebook $B$ can improve accuracy of the second codebook $B$.

In a possible design, the terminal device may compress the channel frequency domain response matrix $H$ with reference to a DFT codebook and the second codebook $B$. For example, the second codebook $B$, the channel frequency domain response matrix $H$, and the gain coefficient $c$ satisfy: $c = F_H^M HB$ , where $F_M$ is a matrix with a size of M×L, column vectors of $F_M$ are L columns of a discrete Fourier DFT codebook, $F_M^H$ is used to detect channel delay information, the second codebook $B$ is used to detect channel Doppler information, and L is a positive integer less than or equal to M.

In this way, the channel frequency domain response matrix H can be compressed from both a delay domain and a Doppler domain, and a compression rate can be improved.

In a possible design, the terminal device may further send one or more of the following information to the network device:

first information, indicating the terminal device to compress the channel frequency domain response matrix $H$ by using the second codebook $B$;
second information, indicating N and/or M;
third information, indicating a value of the normalized Doppler shift $\breve{f}_d$ ;
fourth information, indicating the first codebook $\tilde{B}$ and/or the second codebook, or indicating a method for constructing the first codebook $\tilde{B}$ and/or the second codebook $B$; and
fifth information, indicating a quantity D of column vectors of the second codebook $B$, or indicating a method for determining a quantity D of column vectors of the second codebook $B$.

The foregoing information can be provided to assist the network device in determining the first codebook $\tilde{B}$ or the second codebook $B$ more quickly and accurately for channel reconstruction, and can ensure codebook consistency between the terminal device and the network device, so that the network device can restore complete channel state information (for example, the channel frequency domain response matrix $H$ ).

According to a second aspect, an information transmission method is provided, including: A network device sends a CSI-RS on a channel state information sounding signal CSI-RS resource block; the network device receives a channel gain coefficient c from a terminal device; and the network device performs channel reconstruction on the channel gain coefficient c based on a first codebook $\tilde{B}$ or a second codebook $B$, to obtain a channel frequency domain response matrix $H$ with a size of M×N, where $H$ is used to determine a precoding matrix. N is less than or equal to a quantity of symbols included in the CSI-RS resource block, M is less than or equal to a quantity of subcarriers in a single CSI-RS symbol in the CSI-RS resource block, a column vector of the second codebook B is obtained by extracting a column vector of the first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$ of the terminal device.

In the foregoing solution, when performing channel reconstruction, the network device may flexibly choose to perform channel reconstruction based on the first codebook $\tilde{B}$ or the second codebook B. Because the first matrix $\Gamma$ is related to at least one of the CSI-RS resource block and the normalized Doppler shift $\breve{f}_d$, and the column vector of the second codebook $B$ is obtained by extracting the column vector of the first codebook $\tilde{B}$, reconstructing the channel frequency domain response matrix by the network device based on the second codebook $B$ can improve accuracy of channel reconstruction, or reconstructing the channel frequency domain response matrix by the network device based on the first codebook $\tilde{B}$ can improve accuracy and integrity of channel reconstruction. This solution can effectively reduce a channel reconstruction error and improve communication performance.

In a possible design, N is configured by the network device; or N is equal to a quantity of CSI-RS symbols included in the CSI-RS resource block; or N is equal to the quantity of symbols included in the CSI-RS resource block. Certainly, the foregoing three types are merely examples but not limitations.

In a possible design, M is configured by the network device; or M is equal to the quantity of subcarriers in the single CSI-RS symbol in the CSI-RS resource block; or M is equal to a quantity of subcarriers of a CSI-RS resource block in the single CSI-RS symbol in the CSI-RS resource block. Certainly, the foregoing three types are merely examples but not limitations.

In a possible design, the normalized Doppler shift $\breve{f}_d$ indicates that a Doppler shift $f_d$ is divided by a product of M and a subcarrier width.

In a possible design, an element in the first matrix $\Gamma$ satisfies: $\{\Gamma\}_{a,b} = sin(2\pi(a - b)\breve{f}_d/\pi(a - b)$, where $\{\Gamma\}_{a,b}$ indicates an element in an $a^{th}$ row and a $b^{th}$ column in the first matrix $\Gamma$, and the first matrix $\Gamma$ is a matrix with M×N rows and M×N columns. The first codebook $\tilde{B}$ is obtained in the following manner: performing eigenvalue decomposition on the first matrix $\Gamma$, to obtain D eigenvectors, where the first matrix $\Gamma$ satisfies: $\Gamma \varphi_i = \lambda_i \varphi_i$, $\varphi_i$ indicates an $i^{th}$ eigenvector, $\varphi_i$ is a discrete ellipsoid sequence, $\lambda_i$ indicates an $i^{th}$ eigenvalue, and D is a positive integer not exceeding N; and using the D eigenvectors as column vectors of the first codebook $\tilde{B}$.

In a possible design, the D eigenvectors are eigenvectors corresponding to D largest eigenvalues of the first matrix $\Gamma$. The second codebook B is obtained in the following manner: extracting N elements from a $j^{th}$ eigenvector $\tilde{b}_j$ in the D eigenvectors, and forming a $j^{th}$ column vector $b_j$ of the second codebook $B$ by using the extracted N elements.

In a possible design, D is a preset value; or D is determined based on the normalized Doppler shift $\breve{f}_d$. For example, a quantity D of column vectors of the second codebook B and the normalized Doppler shift $\breve{f}_d$ satisfy:

$$D = \left[2\breve{f}_d N + 1\right] + x$$, where $x$ is an integer.

In a possible design, the network device may extract the N elements at equal intervals from the $j^{th}$ eigenvector $\tilde{b}_j$, in the D eigenvectors by using M consecutive elements as an extraction interval, to form the $j^{th}$ column vector $b_j$ of the second codebook $B$.

In a possible design, the second codebook B, the channel frequency domain response matrix $H$, and the gain coefficient $c$ satisfy: $c = F_M^H HB$, where $F_M$ is a matrix with a size of M×L, column vectors of $F_M$ are L columns of a discrete Fourier DFT codebook, $F_M^H$ is used to detect channel delay information, the second codebook $B$ is used to detect channel Doppler information, and L is a positive integer less than or equal to M.

In a possible design, the network device may further receive one or more of the following information from the terminal device:

first information, indicating the terminal device to compress the channel frequency domain response matrix $H$ by using the second codebook $B$;

second information, indicating N and/or M;

third information, indicating a value of the normalized Doppler shift $\breve{f}_d$;

fourth information, indicating the first codebook $\tilde{B}$ and/or the second codebook, or indicating a method for constructing the first codebook $\tilde{B}$ and/or the second codebook $B$; and

fifth information, indicating a quantity D of column vectors of the second codebook $B$, or indicating a method for determining a quantity D of column vectors of the second codebook $B$.

According to a third aspect, a communication apparatus is provided, and includes a module, a unit, or a technical means configured to implement the method according to any one of the first aspect or the possible designs of the first aspect.

For example, the apparatus may include:

a transceiver module, configured to receive a CSI-RS on a channel state information sounding signal CSI-RS resource block; and

a processing module, configured to: perform channel estimation based on the CSI-RS to obtain a channel frequency domain response matrix $H$ with a size of M×N; and compress, by a terminal device, the channel frequency domain response matrix $H$ by using a second codebook $B$, to obtain a channel gain coefficient $c$, where N is less than or equal to a quantity of symbols included in the CSI-RS resource block, M is less than or equal to a quantity of subcarriers in a single CSI-RS symbol in the CSI-RS resource block, a column vector of the second codebook $B$ is obtained by extracting a column vector of a first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$ of the terminal device.

The transceiver module is further configured to send the channel gain coefficient c to a network device, where the channel gain coefficient c is used for channel reconstruction.

In a possible design, N is configured by the network device; or N is equal to a quantity of CSI-RS symbols included in the CSI-RS resource block; or N is equal to the quantity of symbols included in the CSI-RS resource block. Certainly, the foregoing three types are merely examples but not limitations.

In a possible design, M is configured by the network device; or M is equal to the quantity of subcarriers in the single CSI-RS symbol in the CSI-RS resource block; or M is equal to a quantity of subcarriers of a CSI-RS resource block in the single CSI-RS symbol in the CSI-RS resource block. Certainly, the foregoing three types are merely examples but not limitations.

In a possible design, the normalized Doppler shift $\breve{f}_d$ indicates that a Doppler shift $f_d$ is divided by a product of M and a subcarrier width.

In a possible design, an element in the first matrix $\Gamma$ satisfies: $\{\Gamma\}_{a,b} = sin(2\pi(a - b)\breve{f}_d/\pi(a - b)$, where $\{\Gamma\}_{a,b}$ indicates an element in an $a^{th}$ row and a $b^{th}$ column in the first matrix $\Gamma$, and the first matrix $\Gamma$ is a matrix with M×N rows and M×N columns.

The processing module is configured to: perform eigenvalue decomposition on the first matrix $\Gamma$, to obtain D eigenvectors, where D is a positive integer not exceeding N, the first matrix $\Gamma$ satisfies: $\Gamma\varphi_i = \lambda_i\varphi_i$, $\varphi_i$ indicates an $i^{th}$ eigenvector, $\varphi_i$ is a discrete ellipsoid sequence, and $\lambda_i$ indicates an $i^{th}$ eigenvalue; and use the D eigenvectors as column vectors of the first codebook $\tilde{B}$.

In a possible design, the D eigenvectors are eigenvectors corresponding to D largest eigenvalues of the first matrix $\Gamma$, where D is a positive integer not exceeding N. The processing module is configured to: extract N elements from a $j^{th}$ eigenvector $\tilde{b}_j$ in the D eigenvectors, and form a $j^{th}$ column vector $b_j$ of the second codebook $B$ by using the extracted N elements.

In a possible design, D is a preset value; or

D is determined based on the normalized Doppler shift $\breve{f}_d$. For example, a quantity D of column vectors of the second codebook $B$ and the normalized Doppler shift $\breve{f}_d$ satisfy: $D = [2\breve{f}_dN + 1] + x$, where x is an integer.

In a possible design, the processing module is configured to extract the N elements at equal intervals from the $j^{th}$ eigenvector $\tilde{b}_j$ in the D eigenvectors by using M consecutive elements as an extraction interval, to form the $j^{th}$ column vector $b_j$ of the second codebook $B$.

In a possible design, the second codebook B, the channel frequency domain response matrix $H$, and the gain coefficient $c$ satisfy: $c = F_H^M HB$, where $F_M$ is a matrix with a size of M×L, column vectors of $F_M$ are L columns of a discrete Fourier DFT codebook, $F_M^H$ is used to detect channel delay information, the second codebook $B$ is used to detect channel Doppler information, and L is a positive integer less than or equal to M.

In a possible design, the transceiver module is further configured to send one or more of the following information to the network device:

first information, indicating the terminal device to compress the channel frequency domain response matrix $H$ by using the second codebook $B$;

second information, indicating N and/or M;

third information, indicating a value of the normalized Doppler shift $\breve{f}_d$ ;
fourth information, indicating the first codebook $\tilde{B}$ and/or the second codebook, or indicating a method for constructing the first codebook $\tilde{B}$ and/or the second codebook $B$; and
fifth information, indicating a quantity D of column vectors of the second codebook $B$, or indicating a method for determining a quantity D of column vectors of the second codebook $B$.

According to a fourth aspect, a communication apparatus is provided, and includes a module, a unit, or a technical means configured to implement the method according to any one of the second aspect or the possible designs of the second aspect.

For example, the apparatus may include:

a transceiver module, configured to: send a CSI-RS on a channel state information sounding signal CSI-RS resource block; and receive a channel gain coefficient c from a terminal device; and
a processing module, configured to perform channel reconstruction on the channel gain coefficient c based on a first codebook $\tilde{B}$ or a second codebook $B$, to obtain a channel frequency domain response matrix $H$ with a size of M×N, where $H$ is used to determine a precoding matrix, N is less than or equal to a quantity of symbols included in the CSI-RS resource block, M is less than or equal to a quantity of subcarriers in a single CSI-RS symbol in the CSI-RS resource block, a column vector of the second codebook B is obtained by extracting a column vector of the first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$ of the terminal device.

In a possible design, N is configured by the network device; or N is equal to a quantity of CSI-RS symbols included in the CSI-RS resource block; or N is equal to the quantity of symbols included in the CSI-RS resource block. Certainly, the foregoing three types are merely examples but not limitations.

In a possible design, M is configured by the network device; or M is equal to the quantity of subcarriers in the single CSI-RS symbol in the CSI-RS resource block; or M is equal to a quantity of subcarriers of a CSI-RS resource block in the single CSI-RS symbol in the CSI-RS resource block. Certainly, the foregoing three types are merely examples but not limitations.

In a possible design, the normalized Doppler shift $\breve{f}_d$ indicates that a Doppler shift $f_d$ is divided by a product of M and a subcarrier width.

In a possible design, an element in the first matrix $\Gamma$ satisfies: $\{\Gamma\}_{a,b} = sin(2\pi(a - b)\breve{f}_d/\pi(a - b)$ , where $\{\Gamma\}_{a,b}$ indicates an element in an $a^{th}$ row and a $b^{th}$ column in the first matrix $\Gamma$, and the first matrix $\Gamma$ is a matrix with M×N rows and M×N columns. The processing module is configured to: perform eigenvalue decomposition on the first matrix $\Gamma$, to obtain D eigenvectors, where the first matrix $\Gamma$ satisfies: $\Gamma\varphi_i = \lambda_i\varphi_i$, $\varphi_i$ indicates an $i^{th}$ eigenvector, $\varphi_i$ is a discrete ellipsoid sequence, $\lambda_i$ indicates an $i^{th}$ eigenvalue, and D is a positive integer not exceeding N; and use the D eigenvectors as column vectors of the first codebook $\tilde{B}$.

In a possible design, the D eigenvectors are eigenvectors corresponding to D largest eigenvalues of the first matrix $\Gamma$. The processing module is configured to: extract N elements from a $j^{th}$ eigenvector $\tilde{b}_j$ in the D eigenvectors, and form a $j^{th}$ column vector $b_j$ of the second codebook B by using the extracted N elements.

In a possible design, D is a preset value; or D is determined based on the normalized Doppler shift $\breve{f}_d$ . For example, a quantity D of column vectors of the second codebook B and the normalized Doppler shift $\breve{f}_d$ satisfy: $D = \left[2\breve{f}_d N + 1\right] + x$ , where x is an integer.

In a possible design, the processing module is configured to extract the N elements at equal intervals from the $j^{th}$ eigenvector $\tilde{b}_j$ in the D eigenvectors by using M consecutive elements as an extraction interval, to form the $j^{th}$ column vector $b_j$ of the second codebook $B$.

In a possible design, the second codebook $B$, the channel frequency domain response matrix $H$, and the gain coefficient $c$ satisfy: $c = F_M^H H B$ , where $F_M$ is a matrix with a size of M×L, column vectors of $F_M$ are L columns of a discrete Fourier DFT codebook, $F_M^H$ is used to detect channel delay information, the second codebook $B$ is used to detect channel Doppler information, and L is a positive integer less than or equal to M.

In a possible design, the transceiver module is further configured to receive one or more of the following information from the terminal device:

first information, indicating the terminal device to compress the channel frequency domain response matrix *H* by using the second codebook *B;*

second information, indicating N and/or M;

third information, indicating a value of the normalized Doppler shift $\breve{f}_d$ ;

fourth information, indicating the first codebook $\tilde{B}$ and/or the second codebook, or indicating a method for constructing the first codebook $\tilde{B}$ and/or the second codebook *B;* and

fifth information, indicating a quantity D of column vectors of the second codebook *B,* or indicating a method for determining a quantity D of column vectors of the second codebook *B.*

According to a fifth aspect, a communication system is provided, including:

a terminal device, configured to perform the method according to any one of the first aspect or the possible designs of the first aspect; and

a network device, configured to perform the method according to any one of the second aspect or the possible designs of the second aspect.

According to a sixth aspect, a communication apparatus is provided. The communication apparatus includes a processor and a memory, the memory is configured to store a computer program, and the processor is configured to execute the computer program stored in the memory, so that the apparatus performs the method according to the first aspect or any possible design of the first aspect or the second aspect or any possible design of the second aspect.

According to a seventh aspect, a computer-readable storage medium is provided. The computer-readable storage medium stores a computer program, and when the computer program is executed by a computer, the computer is enabled to perform the method according to the first aspect or any possible design of the first aspect or the second aspect or any possible design of the second aspect.

According to an eighth aspect, a computer program product is provided. The computer program product stores a computer program, and when the computer program is executed by a computer, the computer is enabled to perform the method according to the first aspect or any possible design of the first aspect or the second aspect or any possible design of the second aspect.

For beneficial effect of the designs in the second aspect to the eighth aspect, refer to beneficial effect of corresponding designs in the first aspect. Details are not described again.

BRIEF DESCRIPTION OF DRAWINGS

FIG. 1A to FIG. 1C are diagrams of several communication systems according to an embodiment of this application;

FIG. 2 is a diagram of a signal transmission model of a transmitter in an OFDM system;

FIG. 3 is a schematic flowchart of channel estimation in a 5G NR system;

FIG. 4 is a diagram of a principle of compressing *H* by using a double DFT codebook;

FIG. 5 is a diagram of a CFR being an average of CIRs within a period of time;

FIG. 6 is a diagram of Doppler dispersion;

FIG. 7 is a flowchart of an information transmission method according to an embodiment of this application;

FIG. 8 is a diagram of an eigenvalue;

FIG. 9 is a diagram of equal-interval extraction in a column direction;

FIG. 10 is a diagram of comparison between precision of channel estimation based on a double DFT codebook and precision of channel estimation based on a DFT codebook and a DPSS codebook;

FIG. 11 is a diagram of a communication apparatus according to an embodiment of this application; and

FIG. 12 is a diagram of another communication apparatus according to an embodiment of this application.

DESCRIPTION OF EMBODIMENTS

The following first describes some terms in embodiments of this application.

(1) Discrete Fourier Transform (Discrete Fourier Transform, DFT)/Fast Fourier Transform (Fast Fourier Transform, FFT): For a sequence {*x(n), n* = 0, *..., N* - 1} of *N* points, the DFT is:

$$X(k) = \gamma \sum_{n=0}^{N-1} x(n)\, e^{-j2\pi \frac{nk}{N}}, k = 0, \ldots, N-1.$$

The essence of the DFT is to convert a time domain sequence {$x(n)$} into a frequency domain sequence {$X(k)$}.

The FFT is a fast calculation method of the DFT. $\gamma$ is a constant, and usually $\gamma = 1$, or

$$\gamma = \frac{1}{\sqrt{N}}, \text{ or } \gamma = \frac{1}{N}.$$

(2) Inverse discrete Fourier transform (Inverse Discrete Fourier Transform, IDFT) IDFT/Inverse fast Fourier transform (Inverse Fast Fourier Transform, IFFT): For a sequence {$X(k)$, $k = 0, \ldots, N - 1$} of N points, the IDFT is:

$$x(n) = \beta \sum_{k=0}^{N-1} X(k)\, e^{j2\pi \frac{nk}{N}}, n = 0, \ldots, N-1.$$

The essence of the IDFT is to convert a time domain sequence {$x(n)$} into a frequency domain sequence {$X(k)$}. The IFFT is a fast calculation method of the IDFT. $\beta$ is a constant, and usually

$$\beta = 1, \text{ or } \beta = \frac{1}{\sqrt{N}}, \text{ or } \beta = \frac{1}{N}.$$

(3) Fast time-varying multipath channel: A channel impulse response $h(t, \tau)$ is extended in two dimensions: time t and delay $\tau$. As a result, a signal waveform is distorted in two dimensions: time and frequency. In an actual communication system, it is usually assumed that a channel multipath delay $\tau$ is within a specific range, that is, $0 < \tau < L$. Fast time-varying means that a channel response $h(t,\tau)$ changes rapidly with time $t$. The fast time-varying multipath channel is equivalent to a time-frequency two-dimensional doubly selective fading channel.

(4) Time-frequency two-dimensional doubly selective fading of a channel means that a channel response changes in two dimensions: time and frequency. As a result, a signal waveform is distorted in two dimensions: the time and the frequency. Specifically, a channel time-delay impulse response is expressed as $h(t, \tau)$. When a transceiver is relatively stationary, that is, there is no Doppler effect, a channel remains constant in time $t$, that is, $h(t, \tau) = h(\tau)$. In this case, the channel frequency response $H(f) = FT(h(t, \tau)) = FT(h(\tau))$ is different on different frequency numbers $f$, which reflects frequency selective fading. On the other side, when the transceiver has a relative motion, that is, a Doppler effect exists, a channel time-delay response $h(t, \tau)$ changes in a time dimension $t$, and the channel frequency response $H(t, f) = FT(h(t, \tau))$ changes in both the time dimension and the frequency dimension. Therefore, time-frequency two-dimensional doubly selective fading is generated.

(5) Discrete ellipsoid sequence: The discrete ellipsoid sequence is also referred to as a Slepian sequence or a DPSS sequence, and was invented by Slepian in 1978. The Slepian sequence $\varphi_i(n)$ has a biorthogonal characteristic, remains orthogonal in both a finite time interval {$0, 1, \cdots, N-1$} and an infinite time interval {$-\infty, \cdots, +\infty$}, and is expressed as follows:

$$\sum_{n=0}^{N-1} \varphi_i[n]\varphi_j[n] = \lambda_i \sum_{n=-\infty}^{+\infty} \varphi_i[n]\varphi_j[n] = \delta_{ij}$$

The discrete ellipsoid sequence has a good time-frequency focusing characteristic, and has optimal fitting to a time-varying channel.

Further, a generation manner of the discrete ellipsoid sequence may be expressed as follows:

$$\Gamma \varphi_i = \lambda_i \varphi_i$$

$\varphi_i$ indicates an $i^{th}$ eigenvector of a matrix $\Gamma$ (more generally, the discrete ellipsoid sequence is obtained through eigenvalue decomposition on the matrix $\Gamma$), and an element in the matrix $\Gamma$ is expressed as

$$\{\Gamma\}_{a,b} = sin(2\pi(a-b)f_d Ts / \pi(a-b)).$$

The following describes an embodiment of this application with reference to the accompanying drawings.

Embodiments of this application may be applied to various wireless communication systems.

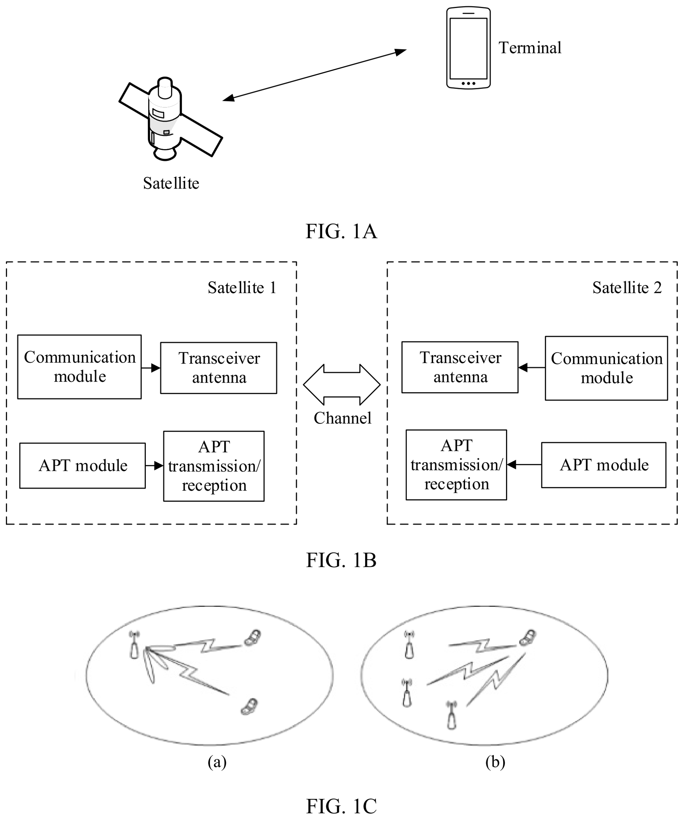

For example, refer to FIG. 1A. Embodiments of this application may be applied to a system for communication between a satellite and a terminal, and the system includes the satellite and a terminal-type network element. The satellite provides a communication service for a terminal device. The terminal device includes but is not limited to a device such as a smartphone, a smartwatch, or a tablet computer. The satellite transmits downlink data to the terminal, and the terminal transmits uplink data to the satellite.

For example, refer to FIG. 1B. Embodiments of this application may be applied to a system for communication between satellites. A conventional inter-satellite link communication system may be divided into two parts: an acquisition, tracking, and pointing (Acquisition, Tracking, and Pointing, APT) subsystem and a communication subsystem. The communication subsystem is responsible for inter-satellite information transmission, and is a main body of the inter-satellite communication system. The APT subsystem is responsible for acquisition, pointing, and tracking between the satellites. Acquisition means to determine a direction of arrival of an incident signal, pointing means to adjust a transmit wave to point at a receiving direction, and tracking means continuous adjustment and acquisition in an entire communication process.

For example, refer to FIG. 1C. Embodiments of this application may be applied to a wireless communication system such as a cellular communication system or a wireless local area network communication system. In the cellular communication system, one network device may provide a service for a plurality of terminals, and one terminal may also communicate with a plurality of network devices. In the wireless local area network communication system, one access point may serve a plurality of terminals, and one terminal may also communicate with a plurality of access points.

The network device is an apparatus that is deployed in a radio access network or a wireless local area network and that provides a wireless communication function for the terminal device. The network device may include various forms of macro base stations, micro base stations (also referred to as small cells), relay stations, access points, and the like. In systems using different radio access technologies, names of the network device may be different. Alternatively, the network device may be a radio controller in a CRAN (Cloud Radio Access Network, cloud radio access network) scenario. Alternatively, the network device may be a base station device in a 5th generation mobile communication technology (5th generation mobile networks, 5G) network or a 6th generation mobile communication technology (6th generation mobile networks, 6G) network, or a network device in an evolved public land mobile network (public land mobile network, PLMN) network. Alternatively, the network device may be a wearable device or a vehicle-mounted device. The network device may alternatively be a transmission reception point (Transmission and Reception Point, TRP). Alternatively, the network device may be an access point (access point, AP).

In addition, the terminal in this specification may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an unmanned aerial vehicle, a helicopter, an airplane, a ship, a robot, a mechanical arm, a smart home device, or the like. A specific technology and a specific device form used by the terminal are not limited in the embodiments of this application.

The network device and the terminal may be at a fixed location or may be movable. The network device and the terminal may be deployed on land, including indoor or outdoor and handheld or vehicle-mounted, may be deployed on water, or may be deployed on an airplane, a balloon, and a satellite in the air. Application scenarios of the network device and the terminal are not limited in the embodiments of this application.

It should be understood that the foregoing several communication systems are merely examples. During actual application, embodiments of this application may also be used in other communication systems.

To overcome problems of a multipath delay and a Doppler effect of a channel in wireless communication, a transmit end may precode data and then send precoded data. To implement a precoding technology, both a sending device and a receiving device need to learn about complete channel state information (for example, a channel frequency domain response matrix H). Therefore, channel estimation is very necessary in a wireless communication system.

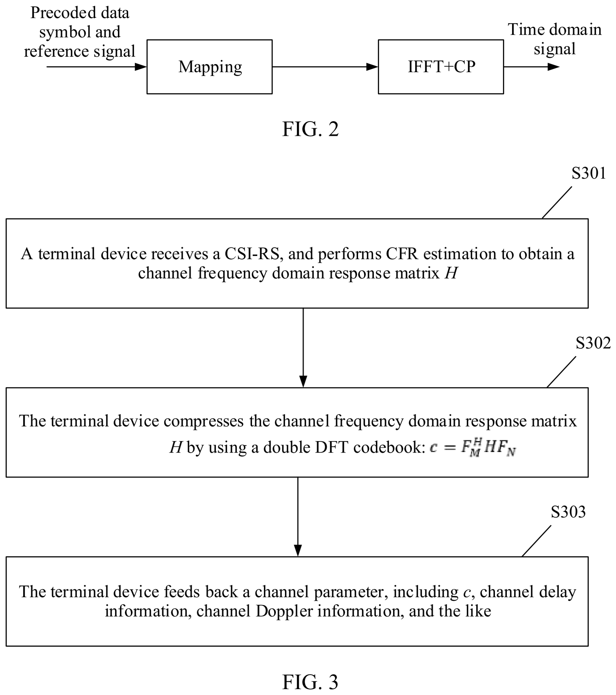

For example, the network device communicates with the terminal device. The network device may send a downlink channel state information-reference signal (Channel State Information-Reference Signal, CSI-RS), and the terminal device may perform channel estimation based on the downlink CSI-RS, to obtain the channel frequency domain response matrix $H$. Because the channel frequency domain response matrix $H$ includes a large quantity of channel parameters, to reduce a feedback amount, the terminal device may compress the channel frequency domain response matrix $H$ into a channel gain coefficient $c$, and then feed back the channel gain coefficient $c$ to the network device. After receiving the channel gain coefficient $c$, the network device performs channel reconstruction, that is, restores the complete channel state information (for example, the channel frequency domain response matrix $H$). Subsequently, the network device may precode data based on the channel frequency domain response matrix $H$, and then send precoded data. FIG. 2 is a diagram of a signal transmission model of a transmitter in an orthogonal frequency division multiplexing (Orthogonal Frequency Division Multiplexing, OFDM) system. The transmitter maps a precoded data symbol and a reference signal, performs inverse Fourier transform, and forms a time domain signal for sending. Mapping means mapping the precoded data and the reference signal to time-frequency (that is, mapping the precoded data and the reference signal to a time-frequency resource), to facilitate subsequent data transmission by using a time-frequency architecture. The inverse Fourier transform is to transform data from frequency to time to generate a to-be-transmitted time domain data sequence. Certainly, there may be another step in an actual transmission process. For example, a cyclic prefix (Cyclic Prefix, CP) may be added to the time domain data sequence. This is not limited in this application.

FIG. 3 is a schematic flowchart of performing channel estimation by a terminal device based on a downlink CSI-RS in a 5G new radio (New Radio, NR) system, including S301 to S303.

S301: The terminal device receives a CSI-RS, and performs channel frequency response (Channel Frequency Response, CFR) estimation (channel estimation for short) at a symbol granularity (Per-symbol), to obtain a channel frequency domain response matrix $H$, where $H$ is a matrix with a size of M×N, that is, $H \in C^{M \times N}$.

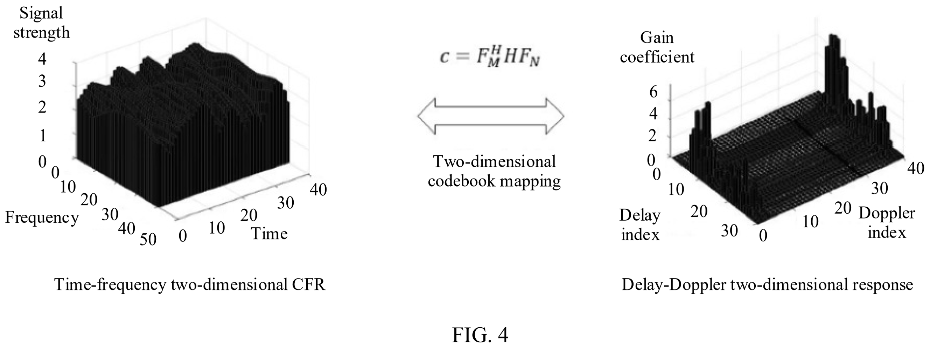

S302: The terminal device compresses $H$ by using a double DFT codebook, and estimates channel delay information and channel Doppler information, that is, $c = F_M^H H F_N$. $F_M^H$ is a DFT codebook used for delay detection, and $F_N$ is a DFT codebook used for Doppler detection. Because both delay domain detection and Doppler domain detection are based on DFT codebooks, the DFT codebooks are referred to as a double DFT codebook. The channel delay information may be obtained based on $F_M^H H$, the channel Doppler information may be obtained based on $HF_N$, and c is a channel gain coefficient obtained through compression. FIG. 4 is a diagram of a principle of compressing $H$ by using the double DFT codebook.

S303: The terminal device feeds back a channel parameter to a network device, where the channel parameter includes $c$, the channel delay information, and the channel Doppler information.

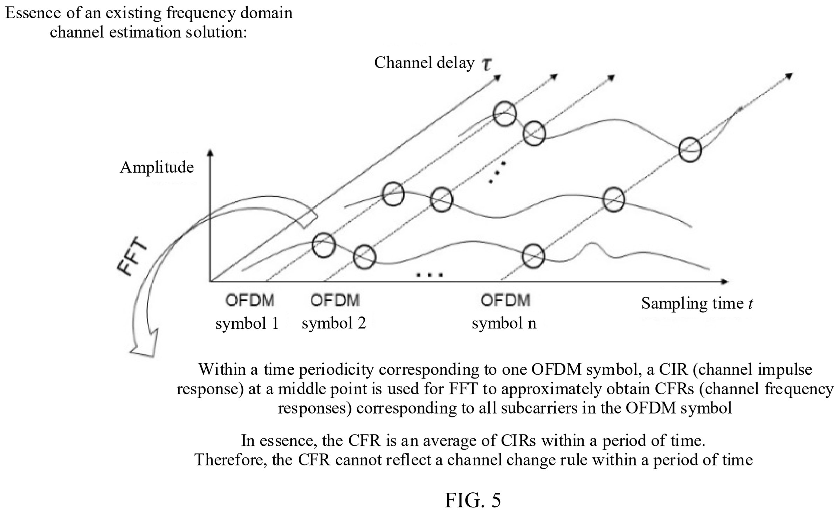

In the foregoing solution, a channel frequency response $H(f)$ is estimated ($H(f)$ is an impulse response $H(f) = FT(h(\tau))$). The CFR is an average of channel impulse responses (Channel Impulse Responses, CIRs) within a period of time (for example, within a time periodicity corresponding to an OFDM symbol, a CIR at a midpoint is selected for FFT, to approximately obtain a plurality of CFRs corresponding to all subcarriers in the OFDM symbol). Therefore, the CFR cannot reflect a change rule of a signal within a period of time, as shown in FIG. 5. Therefore, the essence of the solution is to assume that a channel response $h(t, \tau)$ does not change with time in an OFDM symbol periodicity. However, in a high-speed scenario, $h(t, \tau)$ changes rapidly with time. Once the change is ignored, channel estimation precision is greatly reduced, and demodulation performance deteriorates.

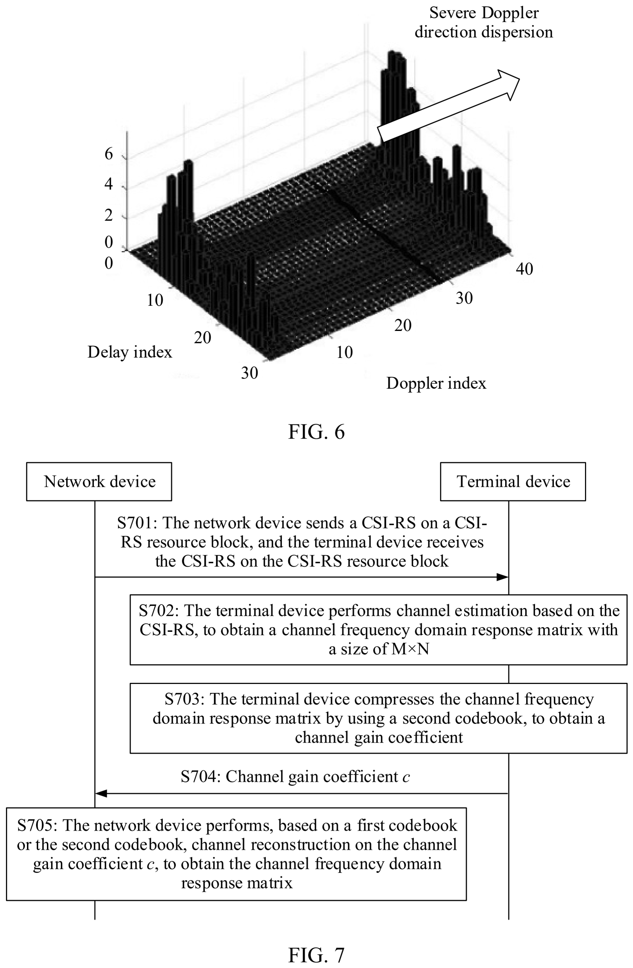

Second, Doppler resolution is 1 kHz, and resolution of the DFT codebook is approximately 30 kHz (a quantity of CSI-RS symbols is 30). Therefore, the channel Doppler information cannot be accurately characterized by using the DFT codebook (namely, $F_N$). The DFT codebook is estimated based on integer multiple Doppler sampling (at an interval of 1000 Hz). Actual channel Doppler is usually a non-integer multiple. Consequently, severe Doppler dispersion is caused, as shown in FIG. 6. The terminal device feeds back only a small amount of integer-multiple Doppler information, so that a channel reconstruction error of the network device is large, and communication performance is affected.

To resolve the foregoing one or more technical problems, technical solutions in embodiments of this application are provided. It may be understood that the technical solutions in embodiments of this application may be applied to any scenario in which channel estimation needs to be performed, including but not limited to several scenarios shown in FIG. 1A to FIG. 1C.

For ease of description, the following uses a scenario in which a network device communicates with a terminal device and the terminal device performs channel estimation as an example.

FIG. 7 is a flowchart of an information transmission method according to an embodiment of this application. The method includes S701 to S705.

S701: A network device sends a CSI-RS on a CSI-RS resource block, and a terminal device receives the CSI-RS on the CSI-RS resource block.

The CSI-RS resource block is a plurality of resource blocks including a CSI-RS resource. One resource block in one symbol includes a plurality of subcarriers. For example, one resource block includes 12 consecutive subcarriers. The CSI-RS resource block may include a plurality of consecutive symbols, and some of the plurality of consecutive symbols include the CSI-RS resource.

S702: The terminal device performs channel estimation based on the CSI-RS, to obtain a channel frequency domain response matrix $H$ with a size of M×N.

N is less than or equal to a quantity of symbols included in the CSI-RS resource block, and M is less than or equal to a quantity of subcarriers in a single CSI-RS symbol in the CSI-RS resource block. In other words, the terminal device may obtain channel estimation results of only a part of channels in the CSI-RS resource block, or may obtain channel estimation results of all channels in the CSI-RS resource block.

In a possible design, N is configured by the network device; or N is equal to a quantity of CSI-RS symbols included in the CSI-RS resource block; or N is equal to the quantity of symbols included in the CSI-RS resource block. Certainly, the foregoing three types are merely examples but not limitations.

In a possible design, M is configured by the network device; or M is equal to the quantity of subcarriers in the single CSI-RS symbol in the CSI-RS resource block; or M is equal to a quantity of subcarriers of a CSI-RS resource block in the single CSI-RS symbol in the CSI-RS resource block. Certainly, the foregoing three types are merely examples but not limitations.

For example, if the CSI-RS resource block includes 512 resource elements (Resource Elements, REs) and 10 OFDM symbols, and a system subcarrier spacing is 30 kHz, M=512, and N=10. The terminal device estimates consecutive CIRs in a period of time based on the received CSI-RS, and may estimate a corresponding channel frequency domain response matrix $H \in C^{512 \times 10}$.

It may be understood that the CSI-RS resource block in S701 is a CSI-RS resource block actually received by the terminal device. The network device may send the CSI-RS based on more CSI-RS resource blocks, and the terminal device may receive the CSI-RS only on a part of the CSI-RS resource blocks.

S703: The terminal device compresses the channel frequency domain response matrix $H$ by using a second codebook $B$, to obtain a channel gain coefficient $c$.

A column vector of the second codebook $B$ is obtained by extracting a column vector of a first codebook $\tilde{B}$. The column vector of the first codebook $\tilde{B}$ is obtained by performing eigenvalue decomposition on a first matrix $\Gamma$. The first matrix $\Gamma$ is related to at least one of the CSI-RS resource block and a normalized Doppler shift $\breve{f}_d$. The first matrix $\Gamma$ is related to at least one of the CSI-RS resource block and the normalized Doppler shift $\breve{f}_d$, and the column vector of the second codebook $B$ is obtained by extracting the column vector of the first codebook $\tilde{B}$. Therefore, the channel frequency domain response matrix $H$ is compressed by using the second codebook $B$, so that a compression rate of the channel frequency domain response matrix $H$ can be ensured, and a Doppler characteristic of a channel can be better retained.

In some embodiments, the first matrix $\Gamma$ may be constructed based on a discrete ellipsoid sequence.

For example, M×N discrete ellipsoid sequences whose lengths are M×N are obtained according to Formula (1) and Formula (2):

$$\{\Gamma\}_{a,b} = sin(2\pi(a-b)f_d Ts/\pi(a-b)) \qquad (1)$$

$$\Gamma\varphi_i = \lambda_i\varphi_i \qquad (2)$$

$\{\Gamma\}_{a,b}$ indicates an element in an $a^{th}$ row and a $b^{th}$ column in the first matrix $\Gamma$, the first matrix $\Gamma$ is a matrix with M×N rows and M×N columns, a and b are indexes, value ranges of a and b may be, for example, integers from 0 to M×N-1, $f_d$ is the Doppler shift, and $Ts$ is a system sampling rate, and is determined by a system bandwidth.

Formula (2) indicates performing eigenvalue decomposition on the first matrix $\Gamma$, to obtain M×N eigenvectors (each eigenvector is a discrete ellipsoid sequence) whose lengths are M×N, $\varphi_i$ indicates an $i^{th}$ eigenvector, $\lambda_i$ indicates an $i^{th}$ eigenvalue, i is an index, and a value range of i may be, for example, an integer from 0 to M×N-1.

Optionally, Formula (1) may be further converted into a form of Formula (3):

$$\{\Gamma\}_{a,b} = sin(2\pi(a-b)\breve{f}_d/\pi(a-b)) \qquad (3)$$

$\breve{f}_d$ indicates the normalized Doppler shift.

Optionally, the normalized Doppler shift $\breve{f}_d$ indicates that a Doppler shift $f_d$ is divided by a product of M and a subcarrier width. The Doppler shift $f_d$ satisfies $f_d = \frac{v}{3 \times 10^8} f_c$, where v indicates a relative moving speed between the terminal device and the network device, and $f_c$ indicates a carrier frequency.

As an example, $\breve{f}_d = f_d Ts$.

It may be understood that Formula (1) and Formula (3) are merely examples. Actually, other variations may be further performed on Formula (1) and Formula (3). This is not limited in this application.

After the M×N eigenvectors whose lengths are M×N are obtained according to the foregoing Formula (1), Formula (2), or Formula (3), D eigenvectors in the M×N eigenvectors whose lengths are M×N are combined into a matrix with M×N rows and D columns, to obtain the first codebook $\tilde{B}$, that is, the first codebook $\tilde{B}$ is a matrix with M×N rows and D columns.

Optionally, the M×N eigenvectors whose lengths are M×N may be arranged in descending order of eigenvalues, and the D eigenvectors are eigenvectors ranks top D, that is, the D eigenvectors are eigenvectors corresponding to D largest eigenvalues of the first matrix $\Gamma$.

It should be understood that, in addition to the discrete ellipsoid sequence, the first matrix $\Gamma$ may be constructed based on another sequence having a biorthogonal characteristic. This is not limited in this application.

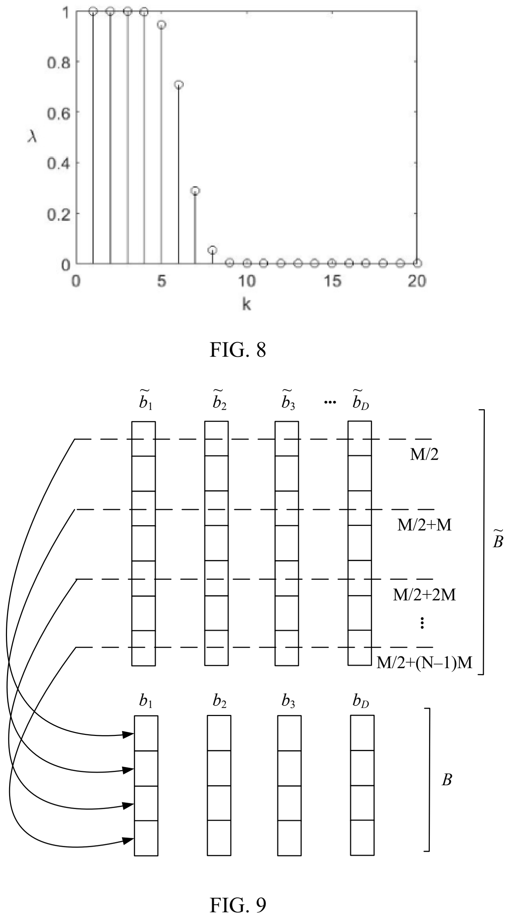

A value of an eigenvalue indicates a capability concentration degree of an eigenvector (or a discrete ellipsoid sequence) on a channel. Generally, the first several values are large, and subsequent values are "cliff-like" decreased. Therefore, the first D eigenvectors with larger eigenvalues are extracted. For example, FIG. 8 is a diagram of an eigenvalue. In FIG. 8, the eigenvalue is almost close to 0 starting from an eighth feature value. Therefore, a value of D may be 7 or 8. It may be understood that this is merely an example, and an actual eigenvalue is not limited thereto.

Optionally, D may be a preset value, and may be set by a person skilled in the art based on experience, or may be specified in a protocol, or may be agreed on by the network device and the terminal device. This is not limited in this application.

Optionally, D may be determined based on the normalized Doppler shift $\breve{f}_d$. For example, a quantity D of column vectors of the second codebook B and the normalized Doppler shift $\breve{f}_d$ satisfy Formula (4):

$$D = \left[ 2\breve{f}_d N + 1 \right] \qquad (4)$$

It should be understood that, Formula (4) may be used as a reference for a value of D. In an actual system, a value obtained by using Formula (4) may be adjusted. For example, if D obtained by using Formula (4) is 5, D may be actually selected as 4 or 6.

For example, Formula (4) may further have the following variation:

$$D = \left[ 2\breve{f}_d N + 1 \right] + x \qquad (5)$$

*x is* an integer.

In specific implementation, a value of x may be determined based on a value of $\breve{f}_d N$. For example, if $\breve{f}_d N$ exceeds a first threshold, the value of x may be 1; if $\breve{f}_d N$ is less than a second threshold, the value of x may be -1; or if the value of $\breve{f}_d N$ is between the first threshold and the second threshold, the value of x may be 0.

In this embodiment of this application, the normalized Doppler shift $\breve{f}_d$ may be obtained in a plurality of manners. The following describes several possible implementations.

Manner 1: The normalized Doppler shift $\breve{f}_d$ may be a specified value or a default value, and may be set by a person skilled in the art based on experience, or may be specified in a protocol, or may be agreed on by the network device and the terminal device. This is not limited in this application.

Manner 2: The terminal device determines the normalized Doppler shift $\breve{f}_d$ based on a maximum moving speed of a user and a subcarrier spacing of a system. For example:

$$\breve{f}_d = v/c \times fc/\Delta f$$

v indicates a moving speed of the user (for example, the terminal device indicates the user), c indicates a speed of light ($3 \times 10^8$ m/s), *fc* indicates a carrier frequency, and $\Delta f$ indicates the subcarrier spacing.

Manner 3: The terminal device obtains and determines the normalized Doppler shift $\breve{f}_d$ based on a DFT codebook. For example, the normalized Doppler shift $\breve{f}_d$ is calculated based on $HF_N$.

Certainly, the foregoing several manners of obtaining the normalized Doppler shift $\breve{f}_d$ are merely examples rather than limitations. Actually, there may be another manner. This is not limited in this application.

After the first codebook $\tilde{B}$ is obtained, element extraction is performed on the first codebook $\tilde{B}$, to obtain the second codebook *B*. For example:
N elements are extracted from a $j$th eigenvector $\tilde{b}_j$ in the D eigenvectors, and a $j$th column vector $b_j$ of the second codebook *B* is formed by using the extracted N elements, where a value of *j* is a positive integer between 1 and D.

In some embodiments, for each of the D eigenvectors, N elements may be extracted at equal intervals by using M consecutive elements as an extraction interval, to form a new column vector. The $j^{th}$ eigenvector $\tilde{b}_j$ is used as an example. The N elements are extracted at equal intervals from the $j^{th}$ eigenvector $\tilde{b}_j$ in the D eigenvectors by using M consecutive elements as an extraction interval, to form the $j^{th}$ column vector $b_j$ of the second codebook $B$.

In some embodiments, initial extraction locations of all the D eigenvectors may be the same. For example, as shown in FIG. 9, an initial extraction location is M/2. Subsequently, all values are obtained at an equal interval of M, and N values are obtained in total, where N is also a length of a new vector after extraction. It may be understood that the initial extraction location (namely, M/2) shown in FIG. 8 is merely an example rather than a limitation, and may be actually another location. This is not limited in this application.

It may be understood that, in this embodiment of this application, the first codebook $\tilde{B}$ and the second codebook $B$ are constructed based on discrete ellipsoid sequences. Therefore, the first codebook $\tilde{B}$ and the second codebook $B$ may also be referred to as discrete ellipsoid sequence codebooks, DPSS codebooks, or the like.

In this embodiment of this application, compressing the channel frequency domain response matrix $H$ by the terminal device by using the second codebook $B$ is compression in a Doppler domain. During specific implementation, the terminal device may compress the channel frequency domain response matrix $H$ with reference to the second codebook $B$ and the DFT codebook. For example, a compression process may be represented by using Formula (6):

$$c = F_M^H HB \qquad (6)$$

$c$ is a gain coefficient, that is, a result obtained after compression, $F_M^H$ is a transposed matrix of $F_M$, $F_M$ is a matrix with a size of M×L, column vectors of $F_M$ are L columns in a discrete Fourier DFT codebook, $F_M^H$ is used to detect channel delay information, the second codebook B is used to detect channel Doppler information, and L is a positive integer less than or equal to M. Optionally, a value of L may be related to a length of a CP. Optionally, a value of L is less than 7% of a symbol periodicity.

Optionally, a channel delay may be further calculated based on $F_M^H H$.

In some embodiments, as long as the value of L is determined, $F_M^H H$ (channel delay) may be determined. Therefore, the channel delay may be indicated by using L.

Optionally, the terminal device may determine the channel Doppler information. The terminal device may directly use, as the channel Doppler information, the normalized Doppler shift $\breve{f_d}$ determined based on the foregoing Manner 1, Manner 2, or Manner 3, or may calculate the normalized Doppler shift $\breve{f_d}$ based on the second codebook $B$, for example, determine the channel Doppler information based on $HB$, to be specific, for example, determine first several larger values from $HB$, and calculate the normalized Doppler shift $\breve{f_d}$ based on these larger values.

S704: The terminal device sends the channel gain coefficient c to the network device, and the network device receives the channel gain coefficient c from the terminal device.

S705: The network device performs, based on the first codebook $\tilde{B}$ or the second codebook B, channel reconstruction on the channel gain coefficient c, to obtain the channel frequency domain response matrix H.

For example, the network device may perform channel reconstruction based on the second codebook $B$ and the channel gain coefficient c, that is, $H = F_M^{Sub} c B^H$; or the network device may perform channel reconstruction based on the first codebook $\tilde{B}$ and the channel gain coefficient c, that is, $H = F_M^{Sub} c \tilde{B}^H$. This is not limited in this application. The channel frequency domain response matrix H restored by the network device by performing channel reconstruction by using the second codebook B is more accurate than the channel frequency domain response matrix H restored by performing channel reconstruction based on the double DFT codebook. The channel frequency domain response matrix H restored by performing channel reconstruction by using the first codebook $\tilde{B}$ is more accurate and finer than the channel frequency domain response matrix H restored by performing channel reconstruction based on the double DFT codebook.

In some embodiments, in addition to feeding back the channel gain coefficient c, the terminal device may further feed back one or more of the following information, for the network device to perform channel reconstruction:

(1) first information, indicating that the terminal device compresses the channel frequency domain response matrix $H$ by using the second codebook $B$, or indicating that the terminal device compresses the channel frequency domain response matrix H by using the discrete ellipsoid sequence codebook, where in an actual system, a bit (bit) may be added to indicate whether the terminal device uses the discrete ellipsoid sequence codebook, for example, a bit value 1 indicates that the discrete ellipsoid sequence codebook is used, and a bit value 0 indicates that no discrete ellipsoid sequence codebook is used; or a bit value 0 indicates that the discrete ellipsoid sequence codebook is used, and a bit value 1 indicates that no discrete ellipsoid sequence codebook is used;

(2) second information, indicating N and/or M;

(3) third information, indicating a value of the normalized Doppler shift $\breve{f}_d$ ;

(4) fourth information, indicating a method for constructing the first codebook $\tilde{B}$ and/or the second codebook $B$, or indicating the first codebook $\tilde{B}$ and/or the second codebook B, where

for example, the terminal device indicates Formula (1) and Formula (2) to the network device;

(5) fifth information, indicating a method for determining D (namely, a quantity of column vectors of the second codebook B), or indicating D, where

for example, the terminal device indicates Formula (4) or Formula (5) to the network device;
through feeding back of the foregoing one or more information, the network device can determine the first codebook $\tilde{B}$ and/or the second codebook $B$ for channel reconstruction, to ensure codebook consistency between the network device and the terminal device; and
for a method for determining the first codebook $\tilde{B}$ by the network device, refer to the foregoing method for determining the first codebook $\tilde{B}$ by the terminal device, for a method for determining the second codebook B by the network device, refer to the foregoing method for determining the second codebook B by the terminal device, and details are not described again; and

(6) sixth information, indicating the channel delay information, for example, the value of L.

In this way, the network device may calculate a channel response in a delay dimension based on L and the channel gain coefficient *c* that is fed back by the terminal device.

After the network device obtains the channel frequency domain response matrix *H* through reconstruction, because the channel frequency domain response matrix *H* indicates channel responses in two dimensions: time domain and frequency domain, and reflects wireless transmission quality in the actual system, the network device may transmit a signal based on the channel frequency domain response matrix *H*, for example, determine a precoding matrix, to improve or resolve a problem of a multipath delay and a Doppler effect of a channel in wireless communication.

In S701 to S705, the terminal device estimates, by using the CSI-RS, consecutive CIRs within a period of time, to obtain the channel frequency domain response matrix, and compresses the channel frequency domain response matrix by using the discrete ellipsoid sequence codebook, where the discrete ellipsoid sequence codebook can be used to accurately characterize the channel Doppler information. In this case, accurate channel state information is fed back to the network device. When performing channel reconstruction, the network device may reconstruct the channel frequency domain response matrix based on the second codebook *B*, so that accuracy of channel reconstruction can be improved. Alternatively, the network device may reconstruct the channel frequency domain response matrix based on the first codebook $\tilde{B}$, so that accuracy and integrity of channel reconstruction can be improved. This effectively reduces an error of channel reconstruction and improves communication performance.

To better understand the foregoing process, another specific example is provided herein.

The terminal device receives the CSI-RS signal on 512 REs and 10 OFDM symbols, and estimates a CFR channel matrix $H \in C^{512 \times 10}$ corresponding to the CSI-RS signal.

The terminal device calculates the normalized Doppler shift $\breve{f}_d$ by using a speed of the terminal device, assumes an order D to be 5, constructs the discrete ellipsoid sequence codebook $\tilde{B} = [\tilde{b}_1, \tilde{b}_2, ..., \tilde{b}_D]$ based on the codebook construction method in S702, performs extraction on $\tilde{B} = [\tilde{b}_1, \tilde{b}_2, ..., \tilde{b}_D]$, to obtain a discrete ellipsoid sequence codebook $B \in C^{10 \times 5}$, where $\tilde{B} \in C^{5120 \times 5120}$.

The terminal device calculates the channel gain coefficient $c = F_M^H H B$ , and selects first L (assumed to be 6) larger values in each column of *c*, to estimate the channel delay, where c is a 6×5 matrix;

The terminal device feeds back, to the network device, one or more of the coefficient *c*, six delay locations corresponding to the coefficient *c*, the discrete ellipsoid sequence codebook or a method for constructing the discrete ellipsoid sequence codebook, the order, 5, of the discrete ellipsoid sequence codebook, the maximum normalized Doppler $\breve{f}_d$ , the quantity, 512, of REs, the quantity, 10, of OFDM symbols, and the like.

A network device base station reconstructs, based on feedback information, channel state information (for example, the channel frequency domain response matrix *H*) on the 512 REs and the 10 OFDM symbols based on $\tilde{B} = [\tilde{b}_1, \tilde{b}_2, ..., \tilde{b}_D]$.

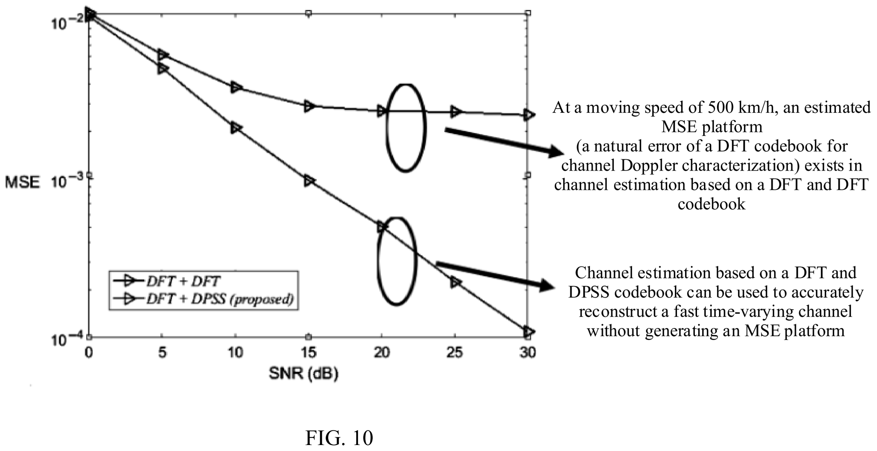

To better understand the technical effect of this embodiment of this application, another group of experimental data is further used as an example herein. FIG. 10 is a diagram of comparison between precision of channel estimation based on a double DFT codebook and precision of channel estimation based on a method (DFT codebook and DPSS codebook) in this application. It can be seen from FIG. 10 that, at a relative moving speed of 500 km/h between a transmitting end and a receiving end, an estimated mean square error (Mean Square Error, MSE) platform (caused by a natural error in channel Doppler characterization by the DFT codebook) exists in an existing DFT and DFT codebook, and a fast time-varying channel can be accurately reconstructed through channel estimation based on the DFT and DPSS codebook provided in this embodiment of this application, without generating the MSE platform.

The methods provided in embodiments of this application are described above with reference to the accompanying drawings. The following describes apparatuses provided in embodiments of this application with reference to the accompanying drawings.

Based on a same technical concept, an embodiment of this application further provides a communication apparatus, including a module, a unit, or a technical means configured to implement the method performed by the terminal device or the network device in the foregoing method embodiments.

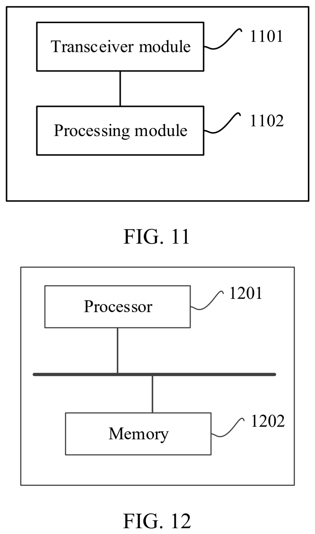

For example, refer to FIG. 11. The communication apparatus may include a transceiver module 1101 and a processing module 1102.

When the communication apparatus is used in a terminal device, the transceiver module 1101 is configured to receive a CSI-RS on a channel state information sounding signal CSI-RS resource block. The processing module 1102 is configured to perform channel estimation based on the CSI-RS, to obtain a channel frequency domain response matrix $H$ with a size of M×N. The terminal device compresses the channel frequency domain response matrix H by using a second codebook $B$, to obtain a channel gain coefficient $c$. N is less than or equal to a quantity of symbols included in the CSI-RS resource block, and M is less than or equal to a quantity of subcarriers in a single CSI-RS symbol in the CSI-RS resource block. A column vector of the second codebook $B$ is obtained by extracting a column vector of a first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$. The transceiver module 1101 is further configured to send the channel gain coefficient c to the network device, where the channel gain coefficient c is used for channel reconstruction.

When the communication apparatus is used in a network device, the transceiver module 1101 is configured to: send a CSI-RS on a channel state information sounding signal CSI-RS resource block; and receive a channel gain coefficient c from a terminal device. The processing module 1102 is configured to perform channel reconstruction on the channel gain coefficient c based on a first codebook $\tilde{B}$ or a second codebook $B$, to obtain a channel frequency domain response matrix $H$ with a size of M×N, where $H$ is used to determine a precoding matrix. N is less than or equal to a quantity of symbols included in the CSI-RS resource block, M is less than or equal to a quantity of subcarriers in a single CSI-RS symbol in the CSI-RS resource block, a column vector of the second codebook B is obtained by extracting a column vector of the first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$.

It should be understood that all related content of the steps in the foregoing method embodiments may be cited as function descriptions of corresponding functional modules. Details are not described herein again.

Based on a same technical concept, an embodiment of this application further provides a communication apparatus. As shown in FIG. 12, the communication apparatus includes a processor 1201 and a memory 1202. The memory 1202 is configured to store a computer program. The processor 1201 is configured to execute the computer program stored in the memory 1202, so that the apparatus performs the method steps performed by the terminal device or the network device in the foregoing method embodiments.

It should be understood that the processor mentioned in embodiments of this application may be implemented by using hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logical device, a discrete gate or a transistor logical device, or a discrete hardware component, the memory (a storage module) may be integrated into the processor.

It should be noted that the memory described in this specification aims to include but is not limited to these memories and any memory of another proper type. Based on a same technical concept, an embodiment of this application further provides a computer-readable storage medium. The computer-readable storage medium stores a computer program. When the computer program is executed by a computer, the computer is enabled to perform the method steps performed by the terminal device or the network device in the foregoing method embodiments.

Based on a same technical concept, an embodiment of this application further provides a computer program product. The computer program product stores a computer program. When the computer program is executed by a computer, the computer is enabled to perform the method steps performed by the terminal device or the network device in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that persons skilled in the art can make various modifications and variations to this application without departing from the scope of this application. This application is intended to cover these modifications and variations of this application provided that they fall within the scope of protection defined by the claims of this application and their equivalent technologies.

**Claims**

1. An information transmission method, comprising:

receiving, by a terminal device, a CSI-RS on a channel state information sounding signal CSI-RS resource block, and performing channel estimation based on the CSI-RS, to obtain a channel frequency domain response matrix H with a size of M×N;
compressing, by the terminal device, the channel frequency domain response matrix H by using a second codebook B, to obtain a channel gain coefficient $c$, wherein N is less than or equal to a quantity of symbols comprised in the CSI-RS resource block, M is less than or equal to a quantity of subcarriers in a single CSI-RS symbol in the CSI-RS resource block, a column vector of the second codebook $B$ is obtained by extracting a column vector of a first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$ of the terminal device; and

sending, by the terminal device, the channel gain coefficient c to a network device, wherein the channel gain coefficient c is used for channel reconstruction.

2. The method according to claim 1, wherein

   N is configured by the network device; or
   N is equal to a quantity of CSI-RS symbols comprised in the CSI-RS resource block; or
   N is equal to the quantity of symbols comprised in the CSI-RS resource block.

3. The method according to claim 1, wherein

   M is configured by the network device; or
   M is equal to the quantity of subcarriers in the single CSI-RS symbol in the CSI-RS resource block; or
   M is equal to a quantity of subcarriers of a CSI-RS resource in the single CSI-RS symbol in the CSI-RS resource block.

4. The method according to any one of claims 1 to 3, wherein the normalized Doppler shift $\breve{f}_d$ indicates that a Doppler shift $f_d$ is divided by a product of M and a subcarrier width.

5. The method according to any one of claims 1 to 4, wherein an element in the first matrix $\Gamma$ satisfies:

$$\{\Gamma\}_{a,b} = sin(2\pi(a - b)\breve{f}_d/\pi(a - b),$$

   wherein

   the first matrix $\Gamma$ is a matrix with M×N rows and M×N columns, and $\{\Gamma\}_{a,b}$ indicates an element in an $a^{th}$ row and a $b^{th}$ column of the first matrix $\Gamma$; and
   the first codebook $\tilde{B}$ is obtained in the following manner:

      performing eigenvalue decomposition on the first matrix $\Gamma$, to obtain D eigenvectors, wherein the first matrix $\Gamma$ satisfies: $\Gamma\varphi_i = \lambda_i\varphi_i$, wherein $\varphi_i$ indicates an $i^{th}$ eigenvector, $\varphi_i$ is a discrete ellipsoid sequence, $\lambda_i$ indicates an $i^{th}$ eigenvalue, and D is a positive integer not exceeding N; and
      using the D eigenvectors as column vectors of the first codebook $\tilde{B}$.

6. The method according to claim 5, wherein the D eigenvectors are eigenvectors corresponding to D largest eigenvalues of the first matrix $\Gamma$; and
   the second codebook B is obtained in the following manner:
   extracting N elements from a $j^{th}$ eigenvector $\tilde{b}_j$ in the D eigenvectors, and forming a $j^{th}$ column vector $b_j$ of the second codebook $B$ by using the extracted N elements.

7. The method according to claim 6, wherein

   D is a preset value; or

   D is determined based on the normalized Doppler shift $\breve{f}_d$.

8. The method according to claim 7, wherein D and the normalized Doppler shift $\breve{f}_d$ satisfy:

$$D = \left[2 \breve{f}_d N + 1\right] + x,$$

wherein $x$ is an integer.

**9.** The method according to claim 5, wherein extracting the N elements from the $j^{\text{th}}$ eigenvector $\tilde{b}_j$ in the D eigenvectors comprises:
extracting the N elements at equal intervals from the $j^{\text{th}}$ eigenvector $\tilde{b}_j$ in the D eigenvectors by using M consecutive elements as an extraction interval, to form the $j^{\text{th}}$ column vector $b_j$ of the second codebook $B$.

**10.** The method according to any one of claims 1 to 9, wherein the second codebook $B$, the channel frequency domain response matrix $H$ , and the gain coefficient $c$ satisfy:

$c = F_M^H H B$ , wherein $F_M$ is a matrix with a size of M×L, column vectors of $F_M$ are L columns in a discrete Fourier DFT codebook, $F_M^H$ is used to detect channel delay information, the second codebook $B$ is used to detect channel Doppler information, and L is a positive integer less than or equal to M.

**11.** The method according to any one of claims 1 to 10, wherein the method further comprises:
sending, by the terminal device, one or more of the following information to the network device:

first information, indicating the terminal device to compress the channel frequency domain response matrix $H$ by using the second codebook $B$;
second information, indicating N and/or M;
third information, indicating a value of the normalized Doppler shift $\breve{f}_d$ ;
fourth information, indicating the first codebook $\tilde{B}$ and/or the second codebook, or indicating a method for constructing the first codebook $\tilde{B}$ and/or the second codebook $B$; and
fifth information, indicating a quantity D of column vectors of the second codebook $B$, or indicating a method for determining a quantity D of column vectors of the second codebook $B$.

**12.** An information transmission method, comprising:

sending, by a network device, a CSI-RS on a channel state information sounding signal CSI-RS resource block;
receiving, by the network device, a channel gain coefficient c from a terminal device; and
performing, by the network device, channel reconstruction on the channel gain coefficient c based on a first codebook $\tilde{B}$ or a second codebook $B$, to obtain a channel frequency domain response matrix $H$ with a size of M×N, wherein $H$ is used to determine a precoding matrix, N is less than or equal to a quantity of symbols comprised in the CSI-RS resource block, M is less than or equal to a quantity of subcarriers in a single CSI-RS symbol in the CSI-RS resource block, a column vector of the second codebook $B$ is obtained by extracting a column vector of the first codebook $\tilde{B}$, the column vector of the first codebook $\tilde{B}$ is obtained by performing eigenvalue decomposition on a first matrix $\Gamma$, and the first matrix $\Gamma$ is related to at least one of the CSI-RS resource block and a normalized Doppler shift $\breve{f}_d$ of the terminal device.

**13.** The method according to claim 12, wherein

N is configured by the network device; or
N is equal to a quantity of CSI-RS symbols comprised in the CSI-RS resource block; or
N is equal to the quantity of symbols comprised in the CSI-RS resource block.

**14.** The method according to claim 12, wherein

M is configured by the network device; or
M is equal to the quantity of subcarriers in the single CSI-RS symbol in the CSI-RS resource block; or
M is equal to a quantity of subcarriers of a CSI-RS resource block in the single CSI-RS symbol in the CSI-RS resource block.

15. The method according to any one of claims 12 to 14, wherein the normalized Doppler shift $\breve{f}_d$ indicates that a Doppler shift $f_d$ is divided by a product of the M and a subcarrier width.

16. The method according to any one of claims 12 to 15, wherein an element in the first matrix $\Gamma$ satisfies:

$$\{\Gamma\}_{a,b} = sin(2\pi(a-b)\breve{f}_d/\pi(a-b),$$

wherein

the first matrix $\Gamma$ is a matrix with M×N rows and M×N columns, and $\{\Gamma\}_{a,b}$ indicates an element in an $a^{th}$ row and a $b^{th}$ column of the first matrix $\Gamma$; and
the first codebook $\tilde{B}$ is obtained in the following manner:

performing eigenvalue decomposition on the first matrix $\Gamma$, to obtain D eigenvectors, wherein the first matrix $\Gamma$ satisfies: $\Gamma\varphi_i = \lambda_i\varphi_i$, wherein $\varphi_i$ indicates an $i^{th}$ eigenvector, $\varphi_i$ is a discrete ellipsoid sequence, $\lambda_i$ indicates an $i^{th}$ eigenvalue, and D is a positive integer not exceeding N; and
using the D eigenvectors as column vectors of the first codebook $\tilde{B}$.

17. The method according to claim 16, wherein the D eigenvectors are eigenvectors corresponding to D largest eigenvalues of the first matrix $\Gamma$; and
the second codebook $B$ is obtained in the following manner:
extracting N elements from a $j^{th}$ eigenvector $\tilde{b}_j$ in the D eigenvectors, and forming a $j^{th}$ column vector $b_j$ of the second codebook $B$ by using the extracted N elements.

18. The method according to claim 17, wherein

D is a preset value; or

D is determined based on the normalized Doppler shift $\breve{f}_d$.

19. The method according to claim 18, wherein D and the normalized Doppler shift $\breve{f}_d$ satisfy:
$D = \left[2\breve{f}_d N + 1\right] + x$, wherein $x$ is an integer.

20. The method according to claim 17, wherein extracting the N elements from the $j^{th}$ eigenvector $\tilde{b}_j$ in the D eigenvectors comprises:
extracting the N elements at equal intervals from the $j^{th}$ eigenvector $\tilde{b}_j$ in the D eigenvectors by using M consecutive elements as an extraction interval, to form the $j^{th}$ column vector $b_j$ of the second codebook B.

21. The method according to any one of claims 12 to 20, wherein the second codebook B, the channel frequency domain response matrix $H$, and the gain coefficient $c$ satisfy:
$c = F_M^H H B$, wherein $F_M$ is a matrix with a size of M×L, column vectors of $F_M$ are L columns in a discrete Fourier DFT codebook, $F_M^H$ is used to detect channel delay information, the second codebook $B$ is used to detect channel Doppler information, and L is a positive integer less than or equal to M.

22. The method according to any one of claims 12 to 21, wherein the method further comprises:
receiving, by the network device, one or more of the following information from the terminal device:

first information, indicating the terminal device to compress the channel frequency domain response matrix $H$ by using the second codebook $B$;
second information, indicating N and/or M;

third information, indicating a value of the normalized Doppler shift $\breve{f}_d$;
fourth information, indicating the first codebook $\tilde{B}$ and/or the second codebook $B$, or indicating a method for constructing the first codebook $\tilde{B}$ and/or the second codebook; and

fifth information, indicating a quantity D of column vectors of the second codebook *B*, or indicating a method for determining a quantity D of column vectors of the second codebook *B*.

23. A communication apparatus, comprising:

a transceiver module, configured to: receive a CSI-RS on a channel state information sounding signal CSI-RS resource block, and perform channel estimation based on the CSI-RS, to obtain a channel frequency domain response matrix *H* with a size of M×N; and

a processing module, configured to compress the channel frequency domain response matrix *H* by using a second codebook *B,* to obtain a channel gain coefficient *c*, wherein N is less than or equal to a quantity of symbols comprised in the CSI-RS resource block, M is less than or equal to a quantity of subcarriers in a single CSI-RS symbol in the CSI-RS resource block, a column vector of the second codebook *B* is obtained by extracting a column vector of a first codebook *B̃*, the column vector of the first codebook *B̃* is obtained by performing eigenvalue decomposition on a first matrix *Γ*, and the first matrix *Γ* is related to at least one of the CSI-RS resource block and a normalized Doppler shift $\breve{f_d}$ of a terminal device, wherein

the transceiver module is further configured to send the channel gain coefficient c to a network device, wherein the channel gain coefficient c is used for channel reconstruction.

24. A communication apparatus, comprising:

a transceiver module, configured to send a CSI-RS on a channel state information sounding signal CSI-RS resource block; and

a processing module, configured to perform channel reconstruction on the channel gain coefficient c based on a first codebook *B̃* or a second codebook *B,* to obtain a channel frequency domain response matrix *H* with a size of M×N, wherein *H* is used to determine a precoding matrix, N is less than or equal to a quantity of symbols comprised in the CSI-RS resource block, M is less than or equal to a quantity of subcarriers in a single CSI-RS symbol in the CSI-RS resource block, a column vector of the second codebook *B* is obtained by extracting a column vector of the first codebook *B̃*, the column vector of the first codebook *B̃* is obtained by performing eigenvalue decomposition on a first matrix *Γ*, and the first matrix *Γ* is related to at least one of the CSI-RS resource block and a normalized Doppler shift $\breve{f_d}$ of a terminal device.

25. A communication system, comprising:

a terminal device, configured to perform the method according to any one of claims 1 to 11; and
a network device, configured to perform the method according to any one of claims 12 to 22.

26. A communication apparatus, wherein the communication apparatus comprises a processor and a memory, the memory is configured to store a computer program, and the processor is configured to execute the computer program stored in the memory, so that the apparatus performs the communication method according to any one of claims 1 to 11, or the apparatus performs the communication method according to any one of claims 12 to 22.

27. A computer-readable storage medium, wherein the computer-readable storage medium stores a computer program, and when the computer program is executed by a computer, the computer is enabled to perform the method according to any one of claims 1 to 11, or the computer is enabled to perform the method according to any one of claims 12 to 22.

28. A computer program product, wherein the computer program product stores a computer program, and when the computer program is executed by a computer, the computer is enabled to perform the method according to any one of claims 1 to 11, or the computer is enabled to perform the method according to any one of claims 12 to 22.

FIG. 1A

FIG. 1B

(a)                                        (b)

FIG. 1C

Precoded data
symbol and
reference signal

Mapping

IFFT+CP

Time domain
signal

FIG. 2

S301

A terminal device receives a CSI-RS, and performs CFR estimation to obtain a
channel frequency domain response matrix $H$

S302

The terminal device compresses the channel frequency domain response matrix
$H$ by using a double DFT codebook: $c = F_M^H H F_N$

S303

The terminal device feeds back a channel parameter, including $c$, channel delay
information, channel Doppler information, and the like

FIG. 3

Time-frequency two-dimensional CFR

$$c = F_M^H H F_N$$

Two-dimensional codebook mapping

Delay-Doppler two-dimensional response

FIG. 4

EP 4 654 537 A1

Essence of an existing frequency domain
channel estimation solution:

Within a time periodicity corresponding to one OFDM symbol, a CIR (channel impulse response) at a middle point is used for FFT to approximately obtain CFRs (channel frequency responses) corresponding to all subcarriers in the OFDM symbol

In essence, the CFR is an average of CIRs within a period of time.
Therefore, the CFR cannot reflect a channel change rule within a period of time

FIG. 5

EP 4 654 537 A1

FIG. 6

**Network device**

**Terminal device**

S701: The network device sends a CSI-RS on a CSI-RS resource block, and the terminal device receives the CSI-RS on the CSI-RS resource block

S702: The terminal device performs channel estimation based on the CSI-RS, to obtain a channel frequency domain response matrix with a size of M×N

S703: The terminal device compresses the channel frequency domain response matrix by using a second codebook, to obtain a channel gain coefficient

S704: Channel gain coefficient $c$

S705: The network device performs, based on a first codebook or the second codebook, channel reconstruction on the channel gain coefficient $c$, to obtain the channel frequency domain response matrix

FIG. 7

FIG. 8

FIG. 9

FIG. 10

FIG. 11

FIG. 12

## INTERNATIONAL SEARCH REPORT

| International application No. |
|---|
| **PCT/CN2023/078878** |

**A. CLASSIFICATION OF SUBJECT MATTER**

H04L 25/02(2006.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, VEN, DWPI, USTXT, WOTXT, EPTXT, 3GPP, CNKI, ISI: 信道估计, 信道状态信息, 压缩, 矩阵, 多普勒, 特征值, 分解, 码本, channel estimation, CSI-RS, compress, matrix, codebook, eigenvale, doppler

**C. DOCUMENTS CONSIDERED TO BE RELEVANT**

| Category* | Citation of document, with indication, where appropriate, of the relevant passages | Relevant to claim No. |
|---|---|---|
| A | CN 115483950 A (HUAWEI TECHNOLOGIES CO., LTD.) 16 December 2022 (2022-12-16) description, paragraphs [0143]-[0308], and figures 10-11 | 1-28 |
| A | US 10211906 B1 (INTEL CORP.) 19 February 2019 (2019-02-19) entire document | 1-28 |
| A | US 2023037394 A1 (SAMSUNG ELECTRONICS CO., LTD.) 09 February 2023 (2023-02-09) entire document | 1-28 |
| A | VIVO. "Further discussion and evaluation on MTRP CSI and partial reciprocity" *3GPP TSG RAN WG1 #104b-e, R1-2102512*, 06 April 2021 (2021-04-06), entire document | 1-28 |

☐ Further documents are listed in the continuation of Box C.　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 November 2023** | **09 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/078878**

| Patent document cited in search report | | | Publication date (day/month/year) | Patent family member(s) | | | Publication date (day/month/year) |
|---|---|---|---|---|---|---|---|
| CN | 115483950 | A | 16 December 2022 | WO | 2022262545 | A1 | 22 December 2022 |
| US | 10211906 | B1 | 19 February 2019 | DE | 112019001463 | T5 | 03 December 2020 |
| | | | | WO | 2019182699 | A1 | 26 September 2019 |
| US | 2023037394 | A1 | 09 February 2023 | WO | 2023003401 | A1 | 26 January 2023 |

Form PCT/ISA/210 (patent family annex) (July 2022)